## Europäisches Patentamt

## European Patent Office

## Office européen des brevets

(11) Veröffentlichungsnummer: **0 243 583**
**A1**

(12) **EUROPÄISCHE PATENTANMELDUNG**

(21) Anmeldenummer: **87100969.2**

(22) Anmeldetag: **23.01.87**

(51) Int. Cl.³: **B 60 S 1/34**

(30) Priorität: **23.04.86 DE 8611078 U**

(43) Veröffentlichungstag der Anmeldung:
**04.11.87 Patentblatt 87/45**

(84) Benannte Vertragsstaaten:
**AT DE FR GB IT**

(71) Anmelder: **Krupp MaK Maschinenbau GmbH**
**Falckensteiner Strasse 2-4**
**D-2300 Kiel 17(DE)**

(72) Erfinder: **Ditting, Günter**
**Steenbarg 17**
**D-2300 Kiel 17(DE)**

(74) Vertreter: **Hansmann, Dierk, Dipl.-Ing.**
**Jessenstrasse 4**
**D-2000 Hamburg 50(DE)**

(54) **Vorrichtung zum Antrieb von Scheibenwischern.**

(57) Es ist vorgesehen, für Fensterformen als schmales Trapez oder nahezu einem Dreieck ein Gelenkviereck mit einem Wischblattträger über einen Motor oszillierend anzutreiben. Hierbei ist der Abstand (Y) zwischen den Anlenkpunkten am Arm (9) als Koppel kleiner als der Abstand (X) zwischen den Anlenkpunkten (4,8) am Fenstervolumen (10) als Gestell.

Croydon Printing Company Ltd.

## Vorrichtung zum Antrieb von Scheibenwischern

Die Erfindung bezieht sich auf eine Vorrichtung zum Antrieb von Scheibenwischern für Fahrzeugfenster, die durch einen Antriebsmotor mit oszillierenden Bewegungen sowie zugeordneten Hebeln als Gelenkviereck gebildet ist, wobei im Gelenkviereck ein Arm als Koppel mit einem winklig fest zugeordneten Wischerblattträger angeordnet ist, an dem ein vom Antriebsmotor ausgehender Wischerarm und ein Lenkhebel im Abstand als Kurbeln angreifen und Wischerarm und Lenkhebel ihre ortsfesten Gelenkpunkte am Fensterrahmen als Gestell besitzen.

Anordnungen dieser Art sind bekannt, wobei das Lenkhebelsystem ein Parallelogramm bildet, so daß der Wischerblattträger im Bewegungsablauf stets parallel zu seiner vorgegebenen Lage geführt wird.

Bei Fensterformen, die einem hohen und schmalen Trapez oder nahezu einem Dreieck entsprechen, ist die Parallelführung des Wischerblattträgers nachteilig, weil nur ein kleines Wischfeld möglich ist. Solche Fensterformen kommen in Fahrzeugen, insbesondere in Schienenfahrzeugen, durch die gegebenen Einschränkungen aus dem Fahrzeugbegrenzungsprofil vor.

Für solche Fensterflächen ist ein ausreichendes Wischfeld in einfacher Weise dadurch zu erzielen, daß der Antriebsmotor an der Schmalseite des Trapezes bzw. an der Spitze des Dreiecks angeordnet ist, und auf ein Lenkgestänge ganz verzichtet wird. Der Wischerblattträger wird so einen Bewegungsablauf erhalten, mit dem das Wischfeld die Fensterfläche weitgehend ausfüllt. Diese einfache Lösung scheidet jedoch dann aus, wenn der Antriebsmotor an der langen Seite des Trapezes bzw. an der Grundlinie des Dreiecks der jeweiligen Fensterfläche angeordnet werden muß. Dies ist zum Beispiel dann der Fall, wenn das Fenster in eine nach außen aufgehende Tür ei gebaut ist.

Aufgabe der Erfindung ist es, eine einfache Vorrichtung der gattungsgemäßen Art zu schaffen, die ein großes Wischfeld bei einer Fensterform mit einem schmalen Trapez oder nahezu einem Dreieck ermöglicht.

Die Lösung dieser Aufgabe erfolgt erfindungsgemäß dadurch, daß der Abstand zwischen den Anlenkpunkten am Arm als Koppel kleiner als der Abstand zwischen den Anlenkpunkten am Fensterrahmen als Gestell ist.

Hierdurch wird ein Lenkhebelsystem mit einem ungleichseitigen Viereck gebildet, wobei der Wischerblattträger im Bewegungsablauf durch den Lenkhebel in eine den jeweiligen Stellungen des Armes entgegengesetzt geneigte Position gesteuert wird.

Eine Ausführungsform der Erfindung besteht darin, daß die Verbindungslinie der ortsfesten Anlenkpunkte am Rahmen als Gestell parallel zur Fensterbegrenzung und in einer Endstellung des Wischerblattträgers etwa parallel zur Verbindungslinie der Anlenkpunkte am Arm angeordnet ist.

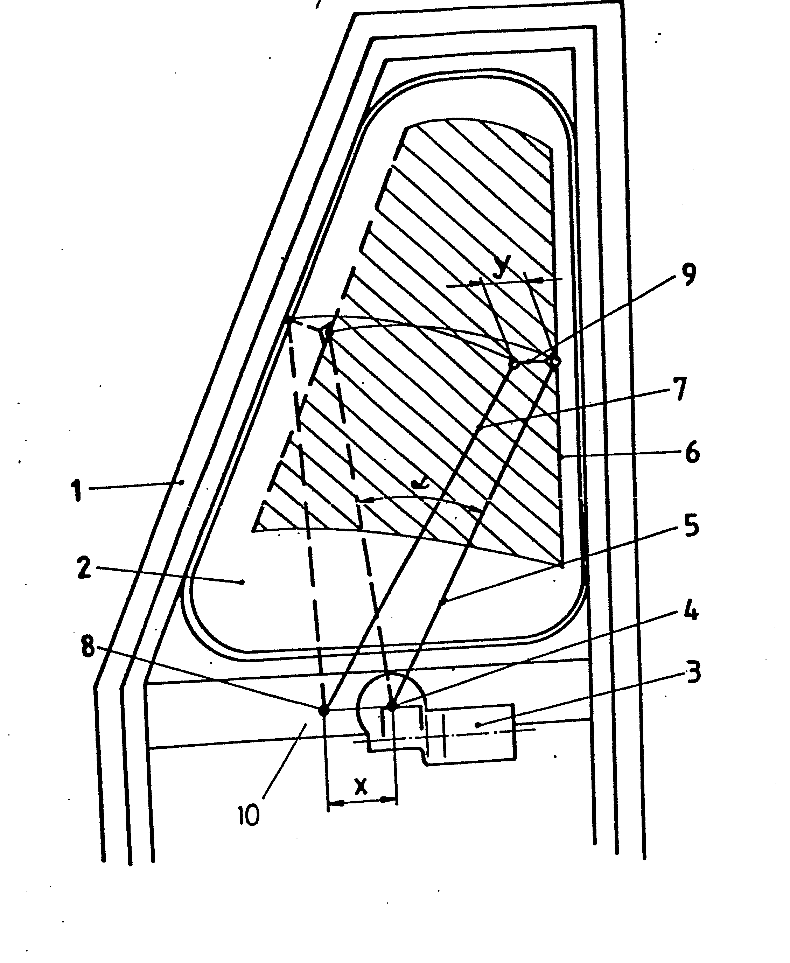

In der Zeichnung ist ein Ausführungsbeispiel der Erfindung für ein trapezförmiges Fahrzeugfenster schematisch dargestellt.

In einer Fahrzeugtür 1 ist ein Fenster 2 mit einer Scheibe in Form eines sich nach oben verjüngenden Trapezes mit abgerundeten Ecken eingesetzt. Unterhalb des Fensters 2 ist am Rahmen 10 ein Scheibenwischermotor 3 mit Antriebswelle mit einem ortsfesten Gelenk 4 für den Wischerarm 5 angeordnet. Der Wischerarm 5 ist am Wischerblattträger 6 gelenkig befestigt. Er führt eine vom Scheibenwischermotor 3 vorgegebene oszillierende Bewegung mit dem Winkel aus. Die Stellung des Wischerblattträgers 6 und damit die Form des Wischfeldes wird über einen Lenkhebel 7 gesteuert, der einerseits im Abstand X von der Antriebswelle mit dem Gelenk 4 des Scheibenwischermotors 3 am Rahmen 10 im ortsfesten Gelenkpunkt 8 gelagert und andererseits am Ende des mit dem Wischerblattträgers 6 fest verbundenen Armes 9, der die Länge Y aufweist, angelenkt ist.

Da Y kleiner als X ist, wird der Wischerblattträger 6 im Bewegungsablauf durch den Lenkhebel 7 so gesteuert, daß ein der Form des Fensters angepaßtes Wischfeld erzielt wird.

**0243583**

## Patentansprüche

1. Vorrichtung zum Antrieb von Scheibenwischern für Fahrzeugfenster, die durch einen Antriebsmotor mit oszillierenden Bewegungen sowie zugeordneten Hebeln als Gelenkviereck gebildet ist, wobei im Gelenkviereck ein Arm als Koppel mit einem winklig fest zugeordneten Wischerblattträger angeordnet ist, an dem ein vom Antriebsmotor ausgehender Wischerarm und ein Lenkhebel im Abstand als Kurbeln angreifen und Wischerarm und Lenkhebel ihre ortsfesten Gelenkpunkte am Fensterrahmen als Gestell besitzen, dadurch gekennzeichnet, daß der Abstand (Y) zwischen den Anlenkpunkten am Arm (9) als Koppel kleiner als der Abstand (X) zwischen den Anlenkpunkten (4,8) am Fensterrahmen (10) als Gestell ist.

2. Vorrichtung nach Anspruch 1, dadurch gekennzeichnet, daß die Verbindungslinie der ortsfesten Anlenkpunkte (4,8) am Rahmen (10) als Gestell parallel zur Fensterbegrenzung und in einer Endstellung des Wischerblattträgers (6) etwa parallel zur Verbindungslinie der Anlenkpunkte am Arm (9) angeordnet ist.

0243583

## EUROPÄISCHER RECHERCHENBERICHT

Nummer der Anmeldung

EP 87 10 0969

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-3 599 270 (MORI) * Spalte 2, Zeilen 3-19; Figur 1 * | 1,2 | B 60 S 1/34 |
| A | US-A-3 076 991 (MACPHERSON) * Spalte 2, Zeilen 43-53 * | 1,2 | |
| A | FR-A- 855 665 (MARCHAL) * Seite 2, Zeilen 11-27 * | 1,2 | |

| | | | RECHERCHIERTE SACHGEBIETE (Int Cl 4) |
|---|---|---|---|
| | | | B 60 S 1/00 |

Der vorliegende Recherchenbericht wurde für alle Patentansprüche erstellt.

| Recherchenort | Abschlußdatum der Recherche | Prüfer |
|---|---|---|
| BERLIN | 13-05-1987 | STANDRING M A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82